Europäisches Patentamt

European Patent Office

Office européen des brevets

(11) Veröffentlichungsnummer: **0 135 608**
A1

# (12) EUROPÄISCHE PATENTANMELDUNG

(21) Anmeldenummer: 83109711.8

(22) Anmeldetag: 28.09.83

(51) Int. Cl.⁴: **B 01 J 8/00,** B 65 G 53/22, B 65 G 53/30

(43) Veröffentlichungstag der Anmeldung: 03.04.85
Patentblatt 85/14

(84) Benannte Vertragsstaaten: **FR GB IT**

(71) Anmelder: **Kernforschungsanlage Jülich Gesellschaft mit beschränkter Haftung, Postfach 1913, D-5170 Jülich (DE)**

(72) Erfinder: **Cremer, Paul, Martin-Flücken-Strasse 2a, D-5012 Bedburg (DE)**
Erfinder: **Erben, Reinhard, Engelsdorfer Weg 39, D-5173 Aldenhoven (DE)**
Erfinder: **Fedders, Heinrich, Dr., Franziskusstrasse 3, D-5170 Jülich (DE)**

(54) **Verfahren und Einrichtung zum Katalysatorwechsel bei engen Rohrreaktoren.**

(57) Der Katalysatorwechsel bei engen Rohrreaktoren (1) mit einem Höhe:Durchmesserverhältnis von mindestens 30 : 1 wird erfindungsgemäß dadurch erreicht, daß die Katalysatorfüllung (6) mit Hilfe eines Förderfluids herausgetrieben wird. Als Förderfluide eignen sich Flüssigkeiten (z.B. Wasser oder Öl) oder Gase (z.B. Preßluft), die über ein axiales Zuleitungsrohr (3) oder außenliegendes Rohr und einen als Verteiler wirkenden Siebboden (2) der Katalysatorschüttung von unten zugeführt werden können. Besonders zuverlässig wirkt ein pulsierender Flüssigkeitsstrom etwa mit Förderpausen von 0,1 bis 1 s zwischen Förderzeiten von 2 bis 20 s. Beim Einsatz gasförmiger Förderfluide wird der Austrag des Rohrreaktors einer Zyklone (8) zur Abscheidung des Katalysators vom Gas zugeleitet, an die sich je nach Bedarf ein Feinfilter (9) anschließt. Mit einem Maximaldruck von etwa 25 bar und einem Vorrat von etwa 20 m³ STP ist ein etwa 10 m langer Rohrreaktor in größenordnungsmäßig einer Minute ausblasbar.

Verfahren und Einrichtung zum Katalysatorwechsel
bei engen Rohrreaktoren

Die Erfindung bezieht sich auf ein Verfahren
zum Katalysatorwechsel bei engen Rohrreaktoren
mit einem Höhe : Durchmesser-Verhältnis von
mindestens 30 : 1, insbesondere über 50 : 1,
sowie auf eine Einrichtung zur Durchführung
des Verfahrens.

Für katalytische Umsetzungen von Gasen bei
erhöhter Temperatur kennt man katalysatorgefüllte
enge Rohre wie zum Beispiel die sog. Röhrenspaltöfen, die bei einer Länge von größenordnungsmäßig 10 m einen Durchmesser in der Gegend
von 0,1 m haben. Die Katalysatoren, die nach
Art von Raschigringschüttungen in diesen Rohren
enthalten sind, müssen entweder routinemäßig
oder störfallbedingt ausgewechselt werden.
Dieser Katalysatorwechsel ist in Anbetracht
der Länge und geringen lichten Weite der Rohre
problematisch.

Dieses Problem hat der Fachmann entweder durch
Öffnen des Rohrbodens und Nachschub von frischem
Katalysator von oben zu lösen versucht in
der Annahme, daß der Katalysator aufgrund
seines eigenen Gewichts aus dem engen Rohr

697
5/ha

- 2 -

herausrutscht (DE-AS 2 165 266 von 1973) oder aber durch einen das Herausrutschen oder Herausfallen der Katalysatorteilchen fördernden "Stochermechanismus" (US-PS 3 164 272 von 1965).

In der Praxis werden enge Rohrreaktoren auch durch Kippen und Ausschütten und -klopfen entleert. Nach einem anderen praktisch angewandten Verfahren wird die Schweißkonstruktion am oberen Spaltrohrende soweit gelöst, daß ein genügender Raum zur Einführung einer Rohrsonde freigegeben wird. Mit Hilfe einer an der Rohrsonde angeschlossenen Saugeinrichtung wird dann die Katalysatorschüttung gelockert und abgesaugt. Je nach Art und Lage der Einbauten, wie Rückführungsrohr, Thermoelementdrähte usw., benötigen nach derzeitigen Erfahrungen zwei Mann etwa 4 bis 10 Stunden zum Entleeren eines z.B. mit 100 kg Raschigringen gefüllten Spaltrohres.

In Kenntnis dieser Schwierigkeiten wurden unterschiedliche Konstruktionen entwickelt, die den Katalysatorwechsel durch zweckmäßige Gestaltung der Katalysatorfüllung erleichtern sollen: So werden gemäß einer Variante Raschigringe auf Stifte aufgefädelt, die von einem zentralen Tragrohr radial bis zur Rohrwand des Rohrreaktors nach außen abstehen. In der Praxis zeigt sich jedoch, daß beim Herausziehen einer solchen Anordnung durch Verklemmen aufgrund zerbrochener Raschigringe Störungen auftreten.

- 3 -

Gemäß einer anderen Entwicklung werden aus Katalysatormaterial gebildete, speziell geformte Lochscheiben fortlaufend auf ein zentrales Rohr aufgeschoben und mit diesem beim Wechsel herausgezogen. Diese Konstruktion ist relativ stabil, aber im Vergleich zu einer Raschigringschüttung von weit geringerer Spaltleistung. Die beiden vorgenannten Varianten haben den erheblichen Nachteil, daß die Ausfüllung des zur Verfügung stehenden Volumens durch den Katalysator nur mangelhaft ist und Kanalbildungen in der Strömung auftreten und die Wärmeübertragung an der Rohrwand nicht optimal ist.

Von der Anmelderin wurde eine Anordnung mit korbförmigen Behältnissen für eine Raschigringschüttung entwickelt, die jeweils in Verbindung mit einem als Halterung dienenden geraden inneren Gasrückführungsrohr leicht ein- und ausbaubar sind (DE-OS 28 48 086). Zur Verringerung der "Randgängigkeit" der Strömung, als Ursache für schlechteren Wärmeübergang von der Rohrwand an das Prozeßgas, sind dabei enge (teure!) Herstellungstoleranzen einzuhalten. Im übrigen erfordern alle diese Varianten eine gute Zugänglichkeit des Rohrreaktors zum Ein- und Ausfahren der kompletten Katalysatoranordnung sowie einen höheren Aufwand an Fertigungs- und Montagearbeiten. Ferner bedingen diese Katalysatoranordnungen einen konstanten Spaltrohr-Innendurchmesser über der gesamten Rohrlänge.

- 4 -

- 4 -

Aufgabe der Erfindung ist daher die Entwicklung eines Verfahrens zum Katalysatorwechsel, das relativ rasch durchführbar ist und eine Katalysatoranordnung zuläßt, die optimale Umsätze gewährleistet.

Überraschenderweise wurde festgestellt, daß der unter Saugwirkung nur außerordentlich schwierige Katalysatorwechsel sehr einfach erreicht werden kann, wenn man die Katalysatorschüttung mit Hilfe eines Förderfluids gegen die Schwerkraft heraustreibt.

Das erfindungsgemäße Verfahren der eingangs genannten Art ist daher dadurch gekennzeichnet, daß die Katalysatorfüllung des Rohrreaktors mit Hilfe eines Förderfluids herausgetrieben wird.

Als Förderfluide kommen Flüssigkeiten und Gase in Betracht, wobei am einfachsten Wasser als Fördermittel dienen kann, wenn der Katalysator nicht wiederverwendet werden soll oder ohne weiteres Feuchtigkeit verträgt. Ein solcher Austrag hat insbesondere den Vorteil, daß keine schwer abscheidbaren Feinstäube aufgewirbelt und möglicherweise aus der Anlage herausgetragen werden. Das Förderfluid kann im Kreislauf rückgeführt werden.

Dabei wird die Katalysatorfüllung einem die "kritische Wirbelgeschwindigkeit" erreichenden Flüssigkeitsstrom ausgesetzt, der auch z.B. durch Öl gebildet werden kann, dessen Dichte sich wenig von derjenigen der Schüttkörper unterscheidet.

Ein zuverlässiger Austrag der Schüttung kann insbesondere durch intermittierende Durchströmung des Rohrreaktors erreicht werden:

Bei einer Durchströmung der Schüttung setzt sich beim Erreichen der "kritischen Wirbelgeschwindigkeit" praktisch die gesamte Schüttung mit dem Fluid in Richtung Austrittsöffnung in Bewegung. Liegt an einer Verengung oder Störstelle eine Brückenbildung der verhältnismäßig großen Katalysatorkörper vor, so stockt der Austrag. Stoppt man den Zustrom des Fluids derart, daß die genannten Brücken wegen fehlenden Staudrucks zusammenbrechen und die Schüttung nach unten sinkt, so kann durch momentan eingeschalteten Zustrom des Fluids erneut gefördert werden usw.

Je nach konstruktiver Anordnung der Abströmung vom Rohrreaktor, des Katalysators (Form und Dichte) und des Fluids findet man verschiedene typische Anströmgeschwindigkeiten, Förderpausen und Förderzeiten, die man über geeignete Regelarmaturen, die den Leitungsquerschnitt momentan freigeben oder sperren, wie Kugelhähne, und Steuerungen einstellen und automatisieren kann. Zur Vermeidung von Schäden, die durch den stoßartigen Betrieb (zwischen O und 100% Förderung), insbesondere bei hydraulischem Betrieb entstehen können, kann die Strömungsgeschwindigkeit auch zwischen einem Wert von z.B. 40 bis 100 % variiert werden. Der untere Wert muß unterhalb der "kritischen Wirbelgeschwindigkeit" liegen und das Zusammenbrechen etwaiger Brücken gewährleisten.

Zweckmäßig werden Förderpausen von etwa 0,1 bis 1 s zwischen Förderzeiten von 2 bis 10 s eingeschoben.

Als gasförmiges Förderfluid kann - soweit zugelassen - am einfachsten Preßluft aus einem Vorratsbehälter oder von einem Kompressor erzeugt verwendet werden.

Sollten je nach Reaktion und Katalysatorfüllungen Brückenbildungen möglich sein oder auch nur ein Verklemmen der Katalysatorteile vorliegen, so kann durch einfache Stoß- oder Vibrationswirkung zu Beginn des Austreibvorganges eine anfängliche Austragverzögerung überwunden werden.

Das erfindungsgemäße Verfahren hat den zusätzlichen Vorteil, daß auch sog. Flaschenhalsrohre mit verengtem Hals im Tragplattenbereich vorgesehen werden können und einen einfachen Katalysatorwechsel bei einer raumausfüllenden Katalysatorschüttung zulassen. Bei solchen Flaschenhalsrohren wären die weiter oben beschriebenen Katalysatorkonstruktionen nicht tauglich.

Eine Einrichtung zum Katalysatorwechsel gemäß der Erfindung bei engen Rohrreaktoren mit einem Siebboden am unteren Ende ist gekennzeichnet durch eine mit dem Raum unter dem Siebboden in Verbindung stehende Quelle für das Förderfluid mit Reguliereinrichtungen und einen mit dem oberen Ende des Rohres verbundenen Partikelabscheider.

Weitere Besonderheiten gehen aus den Unteransprüchen hervor.

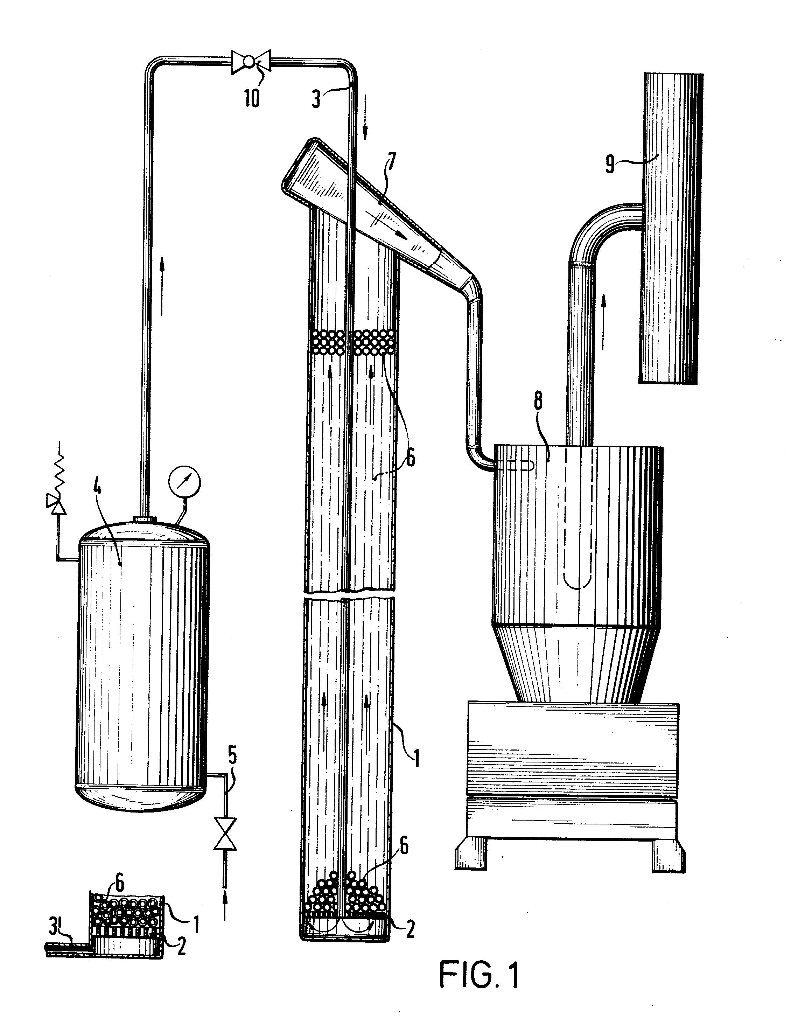

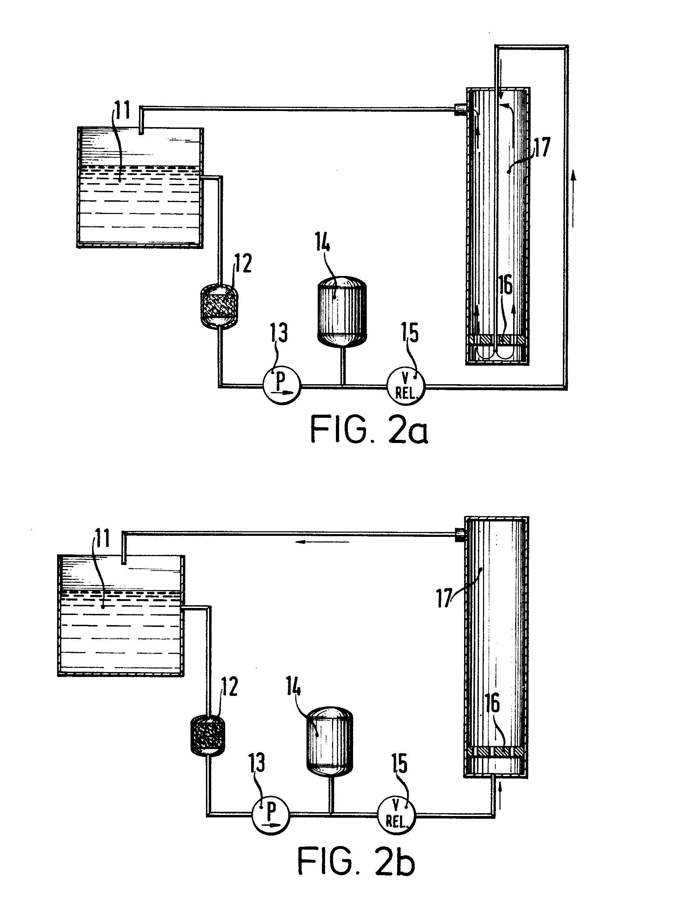

Nachfolgend wird die Erfindung anhand der beigefügten Zeichnungen (Fig.1 und 2) beschrieben, die eine Anordnung zum Katalysatorwechsel mit Hilfe von Preßluft bzw. Flüssigkeit zeigen.

Die schematisch in Fig. 1 dargestellte Versuchsanordnung umfaßt einen 6 m langen Rohrreaktor 1 mit einem Innendurchmesser von 103 mm, der über die gesamte Rohrlänge beheizbar ist. Am unteren Ende dieses Rohrreaktors befindet sich ein Siebboden 2, zu dem eine axiale Leitung 3 für Preßluft aus einem Vorratsbehälter 4 führt. Der Prefluftbehälter 4 ist über eine Leitung 5 beschickbar und hat einen Inhalt von 0,9 m$^3$ bei einem Maximaldruck von 21 bar. Innerhalb des Rohrreaktors hatte die Zuleitung 3 einen Querschnitt von 30 mm bei einer Wandstärke von 2,5 mm. Als Katalysatorfüllung 6 dienten Raschigringe von 10 x 10 x 4 mm.

Statt über eine axiale Leitung 3 innerhalb des Rohrreaktors kann das Förderfluid selbstverständlich auch über eine untere Zuleitung 3' unterhalb des Siebbodens (wie in der Zeichnung links unten angedeutet) zugeleitet werden.

Am oberen Ende ist der Rohrreaktor mit einem Umlenkkasten 7 versehen, der zu einem Zyklonabscheider 8 führt, in dem die Raschigringe vom Luftstrom getrennt werden. Nachgeschaltet ist ein Feinstluftfilter 9 (um kanzerogene Stäube abzuscheiden).

Die Verbindungsleitung zwischen dem Preßluftbehälter 4 und dem Rohrreaktor 1 hatte außerhalb des Reaktors eine lichte Weite von 25 mm. Mittels eines Kugelhahns 10 mit einer lichten Durchgangsbohrung von 15 mm Ø konnte der Luftstrom reguliert werden.

Die Katalysatorschüttung ruhte auf dem mit dem axialen Zuführungsrohr 3 verschweißten Siebboden 2 (Lochplatte), der bei Normalbetrieb eine Überführung von Raschigringen in die dann als Gasrückführungsrohr dienende axiale Zuleitung verhindert. Beim Ausblasen dient dieser Siebboden bei entgegengesetzter

0135608

Strömungsrichtung als Strömungsverteiler.

Mit der beschriebenen Versuchsanordnung wurden diverse Ausblasversuche mit Drucken von zumindest 6 bar bis zu etwa 25 bar und einem Massendurchsatz von etwa 0,3 kg/s durchgeführt; das obere Ende des Rohrreaktors stand mit der Atmosphäre in Verbindung: Dabei wurden lockere und verfestigte (Verfestigung durch Vibration und/oder Temperaturwechsel) Schüttungen von Raschigringen (10 x 10 x 4) aus dem Rohr entfernt.

Variiert wurden der Luftstrom, die Konstruktion des Umlenkkastens und (aus Sicherheitsgründen) das Luftfilter.

Ergebnisse

Bei Versuchen mit einem 6 m langen Rohrreaktor wurden empirische Daten für erforderliche Luftmengen zum Ausblasen des Katalysators gefunden. Anhand dieser Daten konnte eine in mehreren Versuchsläufen "verfestigte", ca. 14 m lange Katalysatorschüttung in einem zweiten längeren Rohrreaktor ausgeblasen werden. Der Versuch wurde mit locker eingebrachter Schüttung wiederholt. In jedem Falle war der Innenraum des Rohrreaktors untypisch stark mit Meßeinrichtungen wie Gasprobenröhrchen, Thermodrähte und deren Halterungen "verbaut". Trotzdem war es möglich, die Katalysatorfüllung mit Hilfe minimaler Vibration (leichter Hammerschlag an die innere Rückführung) beim Start des Ausblasvorganges gänzlich leer zu blasen.

Zum Austrag der "verfestigten" Schüttung wurden etwa 10 m$^3$ Preßluft benötigt. Erklärt wird dieses Erfordernis mit Brückenbildung in der Schüttung zwischen Spaltrohr und innerer Rückführung.

Die Ausblaszeitenlagen zwischen 20 Sekunden bei lockeren und 1 Minute bei verfestigten Schüttungen.

Figur 2a und 2b zeigen ein Fließbild für eine Anordnung zum Katalysatorwechsel mit Hilfe eines flüssigen Fördermediums, das zum einen (Figur 2a) über eine axiale Produktgasrückführung und zum anderen (Figur 2b) unmittelbar zum Siebboden unter dem Katalysator geleitet bzw. rückgeführt wird.

Bei den gezeigten Anlagen wird aus dem Vorratsbehälter 1 über ein Filter 2 mittles einer Kreiselpumpe 3 Flüssigkeit entnommen und über eine Leitung mit angeschlossenem Druckspeicher 4 (zum Ausgleich starker Druckschwankungen, die der Pumpe 3 schaden könnten) und Regelventil 5 zur Erzeugung eines pulsierenden Flüssigkeitsstromes zum Raum unter dem Siebboden 6 im Spaltrohr 7 geleitet.

Das durch den Siebboden einströmende Medium transportiert bei genügend großem Massenstrom den Katalysator aus dem Spaltrohr 7 in den Vorratsbehälter 1. Der Katalysator sinkt dort rasch zu Boden, während das Fördermedium wieder der Kreiselpumpe 3 zugeführt wird. Der Förderkreislauf ist somit geschlossen.

Die gezeigte Verfahrensweise hat insbesondere bei mit kernreaktorkühlgasbeheizten Spaltrohren den Vorteil, daß durch die Wiederverwendung des Förderfluids im geschlossenen Kreislauf die nach Abschluß der Arbeiten notwendige Dekonta_mination sich auf kleinere Fluidmengen beschränkt. Ferner wird ein Austritt von Feinstäuben und unkontrollierte Verbreitung von Aktivität auf einfache Weise vermieden.

Die Wirksamkeit des Katalysatorwechsels mit Hilfe eines pulsierenden Flüssigkeitsstromes konnte experimentell bestätigt werde:

a) Ein Spaltrohr von 7 m Länge und 107 mm Innendurchmesser mit axialem Rückführungsrohr (Außendurchmesser 30 mm) mit Raschig-Ringfüllung (Raschig-Ringe von 10 x 10 x 4 mm) wurde mit Hilfe von Wasser mit einer auf das Leerrohr bezogenen Anströmgeschwindigkeit von $\sim$ 1 m/s in < 1 Min entleert.

b) Bei einem gleichem raschig-ringbestücktem Spaltrohr mit Rohrverengung im Abströmbereich wurde der Fluidstrom intermittierend unterbrochen und zwar wurde der Fluidstrom alle 10 s für etwa 0,5 s gestoppt. Auf diese Weise konnte auch das verengte Rohr in < 1 Min entleert werden.

Kernforschungsanlage Jülich
Gesellschaft mit beschränkter Haftung

P a t e n t a n s p r ü c h e

1. Verfahren zum Katalysatorwechsel bei engen Rohrreaktoren mit einem Höhe : Durchmesser-Verhältnis von mindestens 30 : 1, d a d u r c h g e k e n n z e i c h n e t , daß die Katalysatorfüllung des Rohrreaktors mit Hilfe eines Förderfluids herausgetrieben wird.

2. Verfahren nach Anspruch 1, d a d u r c h g e k e n n z e i c h n e t , daß die Katalysatorfüllung durch einen die"kritische Wirbelgeschwindigkeit" erreichenden Flüssigkeitsstrom ausgetrieben wird.

3. Verfahren nach Anspruch 2, d a d u r c h g e k e n n z e i c h n e t , daß die Katalysatorfüllung durch einen pulsierenden Flüssigkeitsstrom ausgetrieben wird.

4. Verfahren nach Anspruch 3, d a d u r c h g e k e n n z e i c h n e t , daß Förderpausen von 0,1 bis 1 $s$ zwischen Förderzeiten von 2 bis 20 $s$ eingeschoben werden.

5. Verfahren nach Anspruch 1, d a d u r c h g e k e n n z e i c h n e t , daß die Katalysatorfüllung ausgeblasen wird.

697
/ha

- 2 -

6. Verfahren nach einem der vorangehenden Ansprüche,
   g e k e n n z e i c h n e t   d u r c h
   eine Stoß- bzw. Vibrationswirkung vor Beginn
   des Austreibvorganges.

7. Einrichtung zum Katalysatorwechsel nach Anspruch 1,
   bei engen Rohrreaktoren mit einem Siebboden
   am unteren Ende, g e k e n n z e i c h n e t
   d u r c h   eine Förderfluidzulieferung (4, 5)
   mit Reguliereinrichtungen (10), die mit dem
   Raum unter dem Siebboden (2) in Verbindung
   steht und einen mit dem oberen Ende des Rohres (1)
   verbundenen Partikelabscheider (8).

8. Einrichtung nach Anspruch 7, g e k e n n -
   z e i c h n e t   d u r c h   eine mit dem
   Raum unter dem Siebboden verbundene Flüssigkeitszuleitung mit Kugelhähnen und *Förderpumpe und einen mit dem*
   oberen Rohrende verbundenen Absetzraum, von
   dem eine Flüssigkeits __leitung zur Pumpe zurückführt.

9. Einrichtung nach Anspruch 7, g e k e n n -
   k z e i c h n e t   d u r c h   einen Preßluftvorrat (4, 5) oder Kompressor als Förderfluidzulieferung und eine Strömungsumlenkung (7)
   am oberen Rohrende, die mit einem Zyklon (8)
   mit nachgeordnetem Feinstfilter (9) in Verbindung
   steht.

10. Einrichtung nach Anspruch 7, d a d u r c h
    g e k e n n z e i c h n e t , daß die Förderfluid-
    zulieferung (4, 5) mit dem Raum unter dem
    Siebboden (2) über ein axiales Rückführungsrohr (3)
    im Innern des Rohrreaktors (1) in Verbindung
    steht.

FIG.1

2/2                    0135608

FIG. 2a

FIG. 2b

Europäisches
Patentamt

**EUROPÄISCHER RECHERCHENBERICHT**

0135608

Nummer der Anmeldung

EP 83 10 9711

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 410 792 (R.P. VAN DRIESEN et al.) <br> * Auszug; Spalte 1, Zeile 69 - Spalte 2, Zeile 24; Spalte 2, Zeile 38 - Spalte 4, Zeile 41; Abbildung 1 * <br><br> --- | 1-3,7, 8 | B 01 J 8/00 <br> B 65 G 53/22 <br> B 65 G 53/30 |
| X | US-A-3 523 888 (N.C. STEWART et al.) <br> * Auszug; Spalte 2, Zeile 32 - Spalte 4, Zeile 13; Abbildung * <br><br> --- | 1,2,7, 10 | |
| X | FR-A-1 302 166 (THE GAS COUNCIL) <br> * Seite 1, Spalte 1, Zeile 1 - Spalte 2, Zeile 10; Seite 2, Spalte 1, Zeilen 9-27; Abbildung 2 * <br><br> --- | 1,5 | |
| Y | FR-A-1 107 448 (KONINKLIJKE ZWAVELZUURFABRIEKEN) <br> * Seite 1, Spalte 1, Zeilen 1-6; Seite 1, Spalte 1, Zeile 26 - Seite 2, Spalte 1, Zeile 11; Abbildung * <br><br> --- | 1,5 | RECHERCHIERTE SACHGEBIETE (Int. Cl. ³) <br><br> B 01 J <br> B 65 G |
| Y | FR-A-2 195 569 (FUJI PAUDAL) <br> * Seite 4, Zeilen 10-20; Seite 7, Zeile 26 - Seite 8, Zeile 35; Abbildung 4 * <br><br> ----- | 7,9 | |

Der vorliegende Recherchenbericht wurde für alle Patentansprüche erstellt.

| Recherchenort <br> DEN HAAG | Abschlußdatum der Recherche <br> 18-05-1984 | Prüfer <br> SIEM T.D. |
|---|---|---|